Europäisches Patentamt

European Patent Office

Office européen des brevets

(19)

(11) EP 0 619 906 B1

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(21) Anmeldenummer: **93901603.6**

(22) Anmeldetag: **21.12.1992**

(51) Int Cl.$^6$: **G06K 7/10**, G01S 13/02

(86) Internationale Anmeldenummer:
**PCT/DE92/01075**

(87) Internationale Veröffentlichungsnummer:
**WO 93/13495 (08.07.1993 Gazette 1993/16)**

(54) **PASSIVER OBERFLÄCHENWELLEN-SENSOR, DER DRAHTLOS ABFRAGBAR IST**

PASSIVE SURFACE WAVE SENSOR WHICH CAN BE WIRELESSLY INTERROGATED

CAPTEUR PASSIF A ONDES DE SURFACE POUVANT ETRE INTERROGE SANS FIL

(84) Benannte Vertragsstaaten:
**AT BE CH DE FR GB IT LI NL SE**

(30) Priorität: **03.01.1992 DE 4200076**
**22.05.1992 DE 4217049**

(43) Veröffentlichungstag der Anmeldung:
**19.10.1994 Patentblatt 1994/42**

(73) Patentinhaber: **SIEMENS AKTIENGESELLSCHAFT**
**D-80333 München (DE)**

(72) Erfinder:
• **REINDL, Leonhard**
**D-8201 Prutting (DE)**
• **MÜLLER, Folkhard**
**D-8000 München 2 (DE)**
• **RUPPEL, Clemens**
**D-8000 München 80 (DE)**
• **BULST, Wolf-Eckhart**
**D-8000 München 83 (DE)**
• **SEIFERT, Franz**
**A-01170 Wien (AT)**

(56) Entgegenhaltungen:
**DE-A- 3 438 051        US-A- 4 620 191**
**US-A- 4 734 698**

• **REVIEW OF SCIENTIFIC INSTRUMENTS Bd. 60, Nr. 7, Juli 1989, NEW YORK US Seiten 1297-1302 BOWERS ET AL "SURFACE ACOUSTIC-WAVE PIEZOELECTRIC CRYSTAL AEROSOL MASS MICROBALANCE" see page1298,right hand column- page 1299, left hand column; figure3**
• **ELECTRONICS LETTERS Bd. 23, Nr. 9, 23. April 1987, ENAGE GB Seiten 446 - 447 HOLCROFT ET AL 'SURFACE-ACOUSTIC-WAVE DEVICE INCORPORATING CONDUCTING LANGMUIR BLODGETT FILMS'**

**Beschreibung**

Die vorliegende Erfindung bezieht sich auf einen passiven Sensor, der nach dem Prinzip akustischer Oberflächenwellen-Anordnungen arbeitet und dessen Sensorsignale über Funk abgefragt werden können.

In vielen technischen Anwendungsfällen ist es wichtig, interessierende Meßgrößen auf drahtlosem Wege und aus einer gewissen Entfernung verfügbar machen zu können, und zwar so, daß das eigentliche verwendete Sensorelement passiv arbeitet, das heißt keiner eigenen Energiequelle bzw. Stromversorgung bedarf. Zum Beispiel interessiert es, die Temperatur der Radlager und/oder der Bremsklötze an einem vorbeifahrenden Zug überwachen bzw. messen zu können. Ein anderer Anwendungsfall ist, das Drehmoment einer rotierenden Welle einer Maschine zu messen. Ein noch anderer, großer Anwendungsbereich liegt in der Medizin und in der Chemie, zum Beispiel den Sauerstoffpartialdruck im Blut eines lebenden Organismus festzustellen oder insbesondere im Bereich des Umweltschutzes Konzentrationen von Lösungsmitteln in Luft und/oder Wasser bereits aus der Ferne erfassen zu können, um solche z.B. in einer Gefahrenzone gewonnenen Meßdaten dann am gefahrlosen entfernten Ort vorliegen zu haben und zu verarbeiten.

Bisher beschrittene Lösungswege sind, aktive Sensoren zu verwenden, die mit Batterie gespeist sind und telemetrisch abgefragt werden bzw. dauernd senden, oder die Überwachung mittels einer Fernsehkamera auf optischem Wege durchzuführen.

Seit nahezu zwei Jahrzehnten sind Oberflächenwellen-Anordnungen bekannt, bei denen es sich um elektronisch-akustische Bauelemente handelt, die aus einem Substrat mit zumindest in Teilbereichen der Oberfläche piezoelektrischer Eigenschaft und aus auf bzw. in dieser Oberfläche befindlichen Finger-Elektrodenstrukturen bestehen. In der erwähnten Oberfläche werden durch elektrische Anregung, ausgehend von einem elektroakustischen (Eingangs-) Interdigitalwandler, akustische Wellen erzeugt. Diese akustischen Wellen verlaufen in dieser Oberfläche und erzeugen in einem weiteren (Ausgangs-) Wandler aus der akustischen Welle wieder ein elektrisches Signal. Wesentlich bei diesen Bauelementen ist, daß durch Wahl der Struktur der Wandler und gegebenenfalls weiterer auf der Oberfläche angeordneter Strukturen eine Signalverarbeitung des in den Eingangswandler eingegebenen elektrischen Signals in ein Ausgangswandler-Signal durchführbar ist. Eingangswandler und Ausgangswandler können auch ein und dieselbe Wandlerstruktur sein. Es kann ein z. B. breitbandiges Hochfrequenzsignal dem Eingang zugeführt werden und am Ausgang ist ein dagegen zeitselektives, pulskomprimiertes Signal verfügbar, dessen zeitliche Lage ein vorgebbares, von (Meßwert-) Parametern abhängiges Charakteristikum der betreffenden Oberflächenwellen-Anordnung ist.

Auf der Basis von akustischen Oberflächenwellen-Anordnungen arbeiten seit Jahrzehnten Identifizierungsmarken (ID-Tags) (US-A-3273146, US-A-4725841), die über Funk die Anwesenheit bzw. Identität von Gegenständen bzw. Personen festzustellen ermöglichen und die passiv arbeiten. Dabei spielt es eine Rolle, daß in einer solchen Oberflächenwellen-Anordnung aufgrund des kräftigen piezoelektrischen Effekts des Substrats das Abfragesignal zwischengespeichert werden kann und somit keine weitere Stromversorgung der Identifizierungsmarke notwendig ist. Ein von einem Abfragegerät ausgesandter elektromagnetischer Hochfrequenz-Abfrageimpuls wird von der Antenne der Oberflächenwellen-Identifizierungsmarke, d. h. des ID-Tags, aufgefangen.

Mittels des als Eingang betriebenen elektroakustischen Interdigitalwandlers der Oberflächenwellen-Anordnung wird in dieser eine akustische Oberflächenwelle erzeugt. Durch an jeweilige vorgabe angepaßt gewählte Strukturen der Oberflächenwellen-Anordnung, wobei diese Vorgabe ganz individuell gegeben werden kann, wird die in der Anordnung erzeugte Oberflächenwelle moduliert und am Ausgang wird ein dementsprechend moduliertes elektromagnetisches Signal zurückgewonnen. Über die Antenne der Anordnung läßt sich dieses Signal auch in der Entfernung empfangen. Die Oberflachenwellen-Anordnung antwortet somit auf den oben erwähnten Abfrageimpuls in einer für die Anordnung fest vorgegebenen (Grund-) Verzögerung mit einem (individuellen) Hochfrequenz-Identifizierungs-Codewort, das über Funk im betreffenden Abfragegerät auszuwerten ist. Eine solche Anordnung ist z. B. in dem oben an erster Stelle genannten US-Patent aus dem Jahre 1966 beschrieben.

Ganz unabhängig davon ist schon seit ebenfalls mehr als einem Jahrzehnt bekannt, auf der Basis akustischer Oberflächenwellen-Anordnungen arbeitende Sensoren als z. B. Thermometer, Drucksensor, Beschleunigungsmesser, Chemo- oder Biosensor usw. zu verwenden. Beispiele hierfür sind in den Druckschriften "IEEE Ultrasonic Symp. Proc. (1975) pp. 519-522; Proc. IEEE, Vol. 64 (1976) pp. 754-756 und EP-0361729 (1988) beschrieben. Diese bekannten Anordnungen arbeiten auf dem Prinzip eines Oszillators, das sich von der Arbeitsweise der ID-Tags wesentlich unterscheidet und sie benötigen als aktive Anordnungen auch eine eigene Stromversorgung.

In der DE-A-3438051 und US-A-4620191 (Skeie) ist ein passiver Transponder auf der Basis einer Oberflächenwellen-Anordnung beschrieben, der auf ein Abfragesignal hin lediglich mit einem in der Oberflächenwellstruktur kodierten speziellen und damit vorgegeben stets gleichen Antwortsignal antwortet. In der US-A-4734698 ist als Ergänzung zu den vorangenannten Druckschriften angegeben , wie die in IEEE, Ultrason. Symp. 1987, Seiten 583-585 beschrieben untersuchte Temperaturabhängigkeit der in diesem Transponder verwendeten Oberflächenwellen-Anordnung beseitigt werden kann. Mit einem Start- und Stopbit wird eine Normierung aller Laufzeiten bzw. Phasendifferenzen vorgesehen. Damit wird zusätzlich die Temperaturkompensation für den bekannten Tansponder erreicht.

Die oben erwähnte Temperaturabhängigkeit wurde an einer handelsüblichen Identifizierungsmarke untersucht und eine lineare Abhängigkeit der Phasendifferenz der reflektierten Signale zweier Reflektoren der Identifizierungsmarke von der Temperatur festgestellt. Es ist dort auch die Verwendungsmöglichkeit als fernabfragbaren Oberflächenwellen-Temperatursensor angegeben.

In Rev. of Scient. Instr. Vol. 60 (1989), S. 1297-1302 ist ein aktiver d. h. mit Batteriespeisung betriebener mit Oberflächenwellen arbeitender Sensor für Aerosole beschrieben, wie er schon seit mehr als 10 Jahren bekannt ist. Der Sensor besteht aus zwei Oszillatoren mit für deren Betrieb notwendigen energiegespeisten Verstärkerschaltungen.

Ein weiterer, ebenfalls aktiver Sensoren als elektrischer Spannungsmesser mit Beeinflussung der Oberflächenwellengeschwindigkeit ist aus der EP-A-0166065 bekannt.

Ein induktives, mittels einer Koppelschleife energie-gespeistes, mit Oberflächenwellen arbeitendes Identifizierungssystem, wie es in der Automatisierungstechnik verwendet wird, ist aus der DE-A-4025107 bekannt. Durch Auswertung nur fehlerfreier Signalperioden, wird eine Verringerung von Lese/Schreibfehlern erreicht.

In IEEE, Ultrasonic Symp. 1982, S. 177-179 ist zu einem noch länger bekannten, als Spektrumanalysator verwendeten Chirp-Transformprozessor beschrieben, wie dessen Temperaturabhängigkeit vermindert werden kann. Eine dort angegebene Maßnahme ist, eine interne Betriebsfrequenz des Prozessors derart auszuwählen, daß der ansonsten auftretende temperaturbedingte Meßfehler des Prozessors minimiert ist.

Aufgabe der vorliegenden Erfindung ist es, ein Prinzip für Sensoren mit passiv arbeitenden, das heißt keine eigene Stromversorgung erfordernden Sensorelementen anzugeben, die über Funk abgefragt bzw. aus der Ferne berührungslos abgelesen werden können. Insbesondere geht es auch darum, eine zweckmäßige Referenz für einen Vergleich zu haben und/oder Unabhängigkeit von unerwünschten Einflüssen; zum Beispiel Temperaturunabhängigkeit beim Detektieren und Messen anderer Größen als die der Temperatur zu erreichen.

Diese Aufgabe wird mit den Merkmalen des Patentanspruchs 1 gelöst und Weiterbildungen gehen aus den Unteransprüchen und insbesondere Anspruch 24 und folgenden hervor.

Ein Realisierungsprinzip für einen erfindungsgemäßen passiven Oberflächenwellen-Sensor ist, für diesen Sensor (im Regelfall) wenigstens zwei Oberflächenwellen-Anordnungen vorzusehen, von denen die eine solche Anordnung als Referenzelement arbeitet und die andere Anordnung, bzw. mehrere andere Anordnungen, die Funktion des jeweiligen Sensorelementes haben. Diese Sensorelemente liefern an ihrem (jeweiligen) als Ausgang arbeitenden Interdigitalwandler ein Ausgangssignal, das entsprechend der zu messenden Meßgröße gegenüber dem Eingangssignal dieses Sensorelements identifizierbar verändert ist. Gemessen werden können solche Meßgrößen, die die Geschwindigkeit bzw. die Laufzeit der akustischen Welle in der Oberflächenwellen-Anordnung beeinflussen. Dieses Eingangssignal ist ein vom entfernt angeordneten Abfragegerät über Funk ausgesandtes Hochfrequenzsignal, das dem als Eingang arbeitenden Eingangswandler des Sensorelements zugeführt wird. Dieses Hochfrequenzsignal wird aber auch dem Eingang des zugehörigen Referenzelementes zugeführt, in dem eine dem Sensorelement entsprechende Signalverarbeitung erfolgt und von dem ebenfalls ein Ausgangssignal abgegeben wird. Dieses Ausgangssignal ist aber nicht (wesentlich) oder in nur bekannter Weise durch physikalische oder chemische Effekte/Einwirkung der vom Sensorelement festzustellenden Meßgröße beeinflußt und ist somit ein verwendbarer Referenzwert.

Aus dem Vergleich des Ausgangssignals dieses Referenzelementes mit dem Ausgangssignal des zugehörigen Sensorelementes bzw. mit dem jeweiligen Ausgangssignal der mehreren zugehörigen Sensorelemente des erfindungsgemäßen passiven Oberflächenwellen-Sensors gewinnt man zum Beispiel noch an dem Meßort ein Meßwertsignal. Vorzugsweise ist diese Signalverarbeitung ein Phasen-und/oder Laufzeitvergleich oder Frequenzvergleich. Diese Arbeitsweise ist ohne relevante äußere Energiezufuhr im erfindungsgemäßen passiven Oberflächenwellen-Sensor, genauer dessen Sensorelement, möglich. Die für die Übermittlung des Meßwertes notwendige Sendeenergie steht nämlich bei der Erfindung wie bei einer oben beschriebenen Identifizierungsmarke aus der Energie des Abfrageimpulses zur Verfügung.

Der Phasen- und/oder Laufzeitvergleich muß aber nicht unbedingt am Ort des Sensorelementes bzw. am Meßort erfolgen. Sensorelement und Referenzelement können somit vorteilhafter Weise auch räumlich voneinander getrennt angeordnet und lediglich über Funk miteinander funktionell verbunden sein. Der Grund dafür ist, daß gegenüber der Ausbreitungsgeschwindigkeit der akustischen Welle in einer Oberflächenwellen-Anordnung die elektromagnetische Ausbreitungsgeschwindigkeit etwa $10^5$ mal größer ist. Der Phasen- bzw. Laufzeitfehler ist also bei einer solchen getrennten Anordnung im Regelfall vernachlässigbar klein. Im übrigen kann bei bekanntem Abstand zwischen Sensorelement und Referenzelement auch ein entsprechender meßtechnischer Vorhalt vorgesehen sein.

Diese zuletzt beschriebene räumlich getrennte Anordnung ist zum Beispiel in dem Fall von besonderem Vorteil, wenn eine Vielzahl von Meßstellen an einem gemeinsamen Ort abgefragt werden sollen. Ein dies erläuterndes Beispiel ist zum Beispiel die Messung der Temperatur der Bremsklötze und/oder Radlager eines an einem vorgegebenen Ort vorbeifahrenden Eisenbahnzuges. Jedem Bremsklotz bzw. Radlager ist ein Oberflächenwellen-Sensorelement funktionell und räumlich zugeordnet. Das Referenzelement befindet sich in dem Abfrage- und Auswertegerät an einem vorgegebenen Ort entlang des Schienenstranges, auf dem der Zug vorbeifährt.

Im Regelfall werden die Abfrageeinheit einerseits und die Empfangs- und Auswerteeinheit andererseits räumlich miteinander vereinigt angeordnet sein.

Ein ebenfalls zur Erfindung gehörendes Lösungsprinzip besteht darin, anstelle eines wie vorangehend beschriebenen "explizit" vorgesehenen Referenzelementes, die Referenzfunktion "implizit", in das Lösungsprinzip integriert zu haben. Hier vorerst nur mit wenigen Worten ausgeführt, die Detailbeschreibung folgt weiter unten, besteht diese Variante des generellen erfindungsgemäßen Lösungsprinzips darin, daß wiederum wenigstens zwei als Oberflächenwellenstrukturen ausgebildete Elemente mit sensitiver Eigenschaft vorgesehen sind, man diese aber derart "gegeneinander" wirksam werden läßt, daß eine integrale Funktionsweise beider Strukturen sowohl die Sensorfunktion (vergleichsweise der Funktion des klassischen Sensorelements) als auch die Referenzfunktion (des klassischen Referenzelementes des vorausgegangen beschriebenen Systems) umfaßt.

Eine dazu noch weitergehende Fortentwicklung der Erfindung besteht darin, eine Kombination aus Sensorelement und Referenzelement, wie sie zum eingangs beschriebenen System erläutert sind, für die Überwachung/Messung einer vorgegebenen physikalischen Größe wie zum Beispiel einer mechanischen Größe, einzusetzen, diese Elemente aber so auszuwählen und so zu betreiben, daß durch integrale Funktionsweise, ähnlich dem voranstehend erläuterten Lösungsprinzip, eine unerwünschterweise auftretende weitere physikalische Größe, die die Geschwindigkeit der akustischen Welle(-n) in der Oberflächenwellenstrukturen beeinflußt, wie z. B. der Temperatureinfluß, wegkompen siert werden kann. Auch dazu enthält die weiter unten gegebene Detailbeschreibung die weiteren Ausführungen für den Fachmann.

Die bei der Erfindung vorgesehenen passiven Signalauswertungen sind zum Beispiel eine Phasendiskrimination, eine Signalmischung, eine Frequenzmessung und dgl. Die verwendeten Oberflächenwellen-Anordnungen sind Basiselemente eines Referenzelementes und wenigstens eines Sensorelements bzw. die Elemente einer Kombination mit integral, implizit enthaltener Referenzfunktion. Es sind dies mit Oberflächenwellen arbeitende Filter. Diese Oberflächenwellenfilter können Resonatoren, Verzögerungsleitungen, auch solche dispersiver Art, phase shift keying - (PSK-) Verzögerungsleitungen und/oder Convolver sein. Insbesondere sind diese Oberflächenwellen-Anordnungen vorteilhafter Weise als verlustarme Low-Loss-Filter ausgebildet. Für das Lösungsprinzip mit integraler impliziter Referenzfunktion und auch für die Weiterbildung mit zum Beispiel Temperaturkompensation sind gechirpte Reflektor- und/oder Wandlerstrukturen geeignet.

Diese Oberflächenwellen-Anordnungen arbeiten mit Nutzung des piezoelektrischen Effekts des Substratmaterials bzw. einer auf einem Substrat befindlichen piezoelektrischen Schicht. Als piezoelektrisches Material eignen sich außer dem besonders temperaturunabhängig frequenzstabilen Quarz vor allem aber auch solches mit hoher piezoelektrischer Kopplung, wie das Lithiumniobat, Lithiumtantalat, Lithiumtetraborat und dgl. (als Einkristall), Zinkoxid, insbesondere für Schichten, und piezoelektrische Keramik, die aber dafür erhebliche Temperaturabhängigkeit haben.

Es ist oben bereits davon gesprochen worden, daß das Referenzelement und das eine Sensorelement bzw. die mehreren Sensorelemente räumlich miteinander vereinigt angeordnet sein können. Ein Vorteil einer solchen Anordnung ist, daß die Phasen- und/oder Laufzeitauswertung und dgl. weitgehend frei von äußeren Störungen ausgeführt werden kann, bzw. äußere Störungen zum Beispiel durch geeignete Abschirmungen auf ein Minimum herabgedrückt werden können. Natürlich muß dabei dafür Sorge getragen sein, daß das Referenzelement wenigstens weitestgehend von dem physikalischen Einfluß frei ist, den die zu messende Größe ausübt, die zum Beispiel die Temperatur ist. Dazu können zum Beispiel das Referenzelement und das eine oder die mehreren Sensorelemente auf voneinander getrennten Substraten angeordnet sein und nur das jeweilige Sensorelement ist dem Einfluß der Meßgröße ausgesetzt. Für Temperaturmessungen kann zum Beispiel auch vorgesehen sein, für das Referenzelement Quarz als Substrat zu verwenden, wohingegen für das oder die Sensorelemente Lithiumniobat oder ein anderes Substratmaterial vorgesehen ist, das relativ große Temperaturabhängigkeit aufweist. Temperaturveränderungen des Quarz-Substrates des Referenzelementes wirken sich auf dessen Ausgangssignal für viele Fälle noch vernachlässigbar aus.

Es kann zur (Temperatur-) Kompensation auch vorgesehen sein, Korrekturvorgaben zu machen. Dies kann zum Beispiel dadurch erreicht werden, daß mittels eines der Sensorelemente die augenblickliche Temperatur der ganzen Oberflächenwellenanordnung ermittelt wird und dieser Temperaturwert als Vorgabe für die Korrektur der Meßwerte derjenigen übrigen Sensorelemente herangezogen wird, die andere physikalische Größen messen.

Auch für das System mit integraler, impliziter Referenzfunktion oder dessen Weiterbildung mit zum Beispiel integraler Temperaturkompensation, ist die vereinigte Anordnung der Elemente zweckmäßig und in der Regel zum Erreichen hoher Genauigkeit sogar erforderlich.

Zur Steigerung der Übertragungsmöglichkeiten zwischen der erfindungsgemäßen Sensoranordnung (mit oder ohne darin enthaltenem Referenzelement) empfiehlt es sich, daß an sich bekannte Bandspreizverfahren anzuwenden und angepaßte Filter (matched filter) mit Pulskompression vorzusehen.

Für Oberflächenwellen-Anordnungen ist es bekannt, diese so zu konzipieren, daß Rayleigh-Wellen, Oberflächen-Scherwellen, Oberflächen-Leckwellen und dgl. erzeugt und ausgewertet werden.

In den Fällen, in denen von einem Abfragegerät mehrere Oberflächenwellen-Sensorelemente abgefragt werden sollen, zum Beispiel mehrere verschiedene Meßgrößen und/oder die gleiche Meßgröße an verschiedenen Orten und/oder Objekten, festgestellt werden sollen, können den einzelnen (Sensor-) Elementen vorteilhafterweise außerdem auch Identifizierungsfunktionen hinzuintegriert sein. Diese Integration kann auf einem getrennten Substratchip oder in vielen Fällen vorteilhafter Weise auch auf demselben Substratchip ausgeführt sein. Diese Identifizierungsfunktion entspricht einer solchen, wie sie bei eingangs beschriebenen 10-Marken erläutert worden ist. Eine solche Identifizierungsfunktion kann bei der Erfindung so ausgeführt sein, daß diese Identifizierungsfunktion zusätzlich in die für die Erfindung vorgesehene Oberflächenwellenstruktur integriert ist oder daß zwischen Signaleingang und Signalausgang der für die Erfindung verwendeten Oberflächenwellen-Anordnung noch eine entsprechende zusätzliche (Identifizierungs-) Struktur eingefügt ist. Zum Beispiel kann dies zweckmäßiger Weise für das jeweilige Sensorelement vorgesehen sein. Bei zueinander fest zugeordnetem Sensorelement und Referenzelement kann auch das Referenzelement diese Identifizierungsfunktion enthalten. Eine andere bei der Erfindung anwendbare Maßnahme ist diejenige, die Frequenz des eigentlichen Meßsignals und diejenige des Identifizierungssignals voneinander verschieden hoch zu wählen. Mit dieser Maßnahme können solche gegenseitigen Störungen vermieden werden, die ansonsten für den Einzelfall nicht von vornherein völlig auszuschließen sind und gegebenenfalls der Berücksichtigung bedürfen. Im Funkbereich eines jeweiligen für die Erfindung vorgesehenen Abfragegerätes kann man in den Fällen, in denen mehrere erfindungsgemäße Oberflächenwellen-Sensoren (Sensorelemente) vorgesehen sind, die voneinander verschiedene Meßwerte zu liefern haben, dafür Vorkehrung treffen, daß jeder dieser erfindungsgemäßen Sensoren auf einer eigenen zugeordneten Frequenz arbeitet, erst nach einer jeweils bestimmten Grundlaufzeit (Verzögerungszeit gegenüber dem Abfrageimpuls) antwortet und/ oder auf individuelle Sende-Impulsfolge angepaßt ist. Es kann auch vorgesehen sein, Sensorelemente und Antenne räumlich zu trennen und nur durch ein hochfrequenzleitendes Kabel und/oder auch durch die elektrisch leitfähige Wandung eines Behälters hindurch zu verbinden.

Es kann für mehrere erfindungsgemäße Sensoren ein und dieselbe Antenne verwendet werden. Es kann auch vorgesehen sein, die Antenne auf dem (jeweiligen) Substrat des betreffenden Oberflächenwellen-Sensors (-Sensorelementes) in integrierter Ausführung anzuordnen.

Durch Verwendung gechirpter Oberflächenwellenstrukturen, insbesondere gechirpter Reflektorstrukturen können weitere vorteilhafte Effekte mit einem Sensor des Prinzips der Erfindung erzielt werden. Zum einen ermöglicht die Verwendung gechirpter Reflektorstrukturen und/oder Wandler anstelle von ungechirpten Strukturen eine größere Sensitivität eines erfindungsgemäßen Sensors zu erzielen. Mit Verwendung daran angepaßt gechirpten Abfragesignalen ist außerdem Kompression der Antwortsignale zu erreichen, was unter anderem auch die Auswertung erleichtert. Mit einem up-chirp-Abfragesignal mit einer dazu ermittelbaren bzw. zu ermittelnden Chirprate und dazu angepaßter down-chirp-Struktur im Sensor kann sogar eine echte, d. h. eine nicht lediglich durch Kompensation erzielte Temperaturunabhängigkeit gezielt genutzt werden.

Weitere Erläuterungen der Erfindung gehen aus der Beschreibung zu beigefügten Figuren hervor.

| | |
|---|---|
| Figur 1 | zeigt eine Ansicht einer prinzipiellen Realisierung eines erfindungsgemäßen Oberflächenwellen-Sensors. |
| Die Figuren 2a und 2b | zeigen integrierte Ausführungen mit einem Referenzelement und einem Sensorelement. Bei entsprechender Ausführung dieser Elemente und mit sich daraus ergebender anzuwendender Betriebsweise gibt Figur 2 auch ein Beispiel für das System mit impliziter Referenzfunktion. |
| Die Figuren 3a und 3b | zeigen Ausführungen mit auf verschiedenen Substraten angeordnetem Referenzelement und Sensorelement. |
| Figur 4 | zeigt eine Ausführung zur Erfindung, bei der sich das Referenzelement im Abfragegerät befindet. |
| Figur 5 | zeigt eine Ausführungsform mit zusätzlicher Identifizierungsfunktion mit unterschiedlichen Frequenzen oder (insbesondere bei gleicher Frequenz) mit unterschiedlichen Laufzeiten von Sensor- und Identifizierungssignal. |
| Figur 6 | zeigt ein Prinzipbild für eine Ausführung mit einem Abfragegerät und mehreren erfindungsgemäßen Oberflächenwellen-Sensoren bzw. einem Sensorarray mit mehreren Einzelsensoren, die mit unterschiedlichen Frequenzen arbeiten. |
| Figur 7 | zeigt eine weitere Anordnung mit zusätzlicher, auf dem Sensor befindlicher Einrichtung zur passiven Signalverarbeitung. |
| Figur 8 | zeigt zur Weiterbildung der Erfindung das Prinzip des Sendens und des Empfangens mit gechirpten Signalen. |

Die Figuren 9a und 9b       zeigen Ausführungsformen zur Figur 8.

Figur 10       zeigt eine graphische Darstellung zum Prinzip nach Figur 8.

Fig. 10a       zeigt eine graphische Darstellung, aus der die Erhöhung der Sensitivität durch Verwendung gechirpter Strukturen erkennbar ist,

Figur 11       zeigt eine weitere Ausführungsform eines zugehörigen Sensors und

Figur 12       zeigt einen temperaturkompensierten Sensor gemäß einer ersten Weiterbildung.

Figur 13       zeigt einen temperaturkompensierten Sensor gemäß einer zweiten Weiterbildung.

Die Figuren 14 und 15       zeigen Ausführungsformen mit codierten Strukturen.

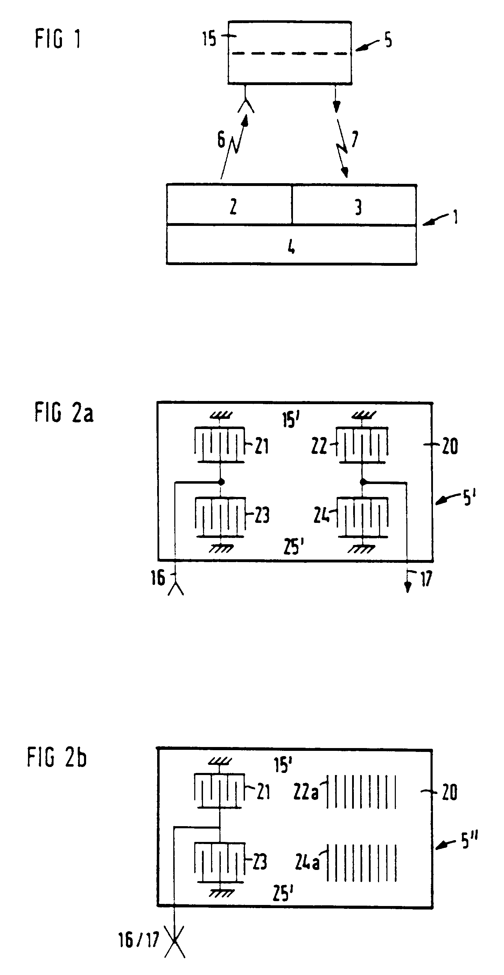

Figur 1 zeigt mit 1 bezeichnet das Abfragegerät, das ein Anteil des erfindungsgemäßen passiven Oberflächenwellen-Sensors ist. Dieses Abfragegerät 1 enthält als Anteile einen Sendeteil 2, einen Empfangsteil 3 und den das Auswertegerät 4 bildenden weiteren Anteil. Mit 5 ist der eigentliche passive Sensor mit Oberflächenwellenanordnung bezeichnet. Im Betrieb besteht die Funkverbindung 6 vom Sendeteil 2 zum Sensor 5 und die Funkverbindung 7 vom Sensor 5 zum Empfangsteil 3. Die für die Funkverbindung 7 erforderliche Energie ist in dem auf dem Funkweg 6 zum Sensor 5 übertragenen Signal enthalten. Der Sensor 5 befindet sich am Meßort und zumindest dessen Sensorelement 15, das wenigstens ein Anteil des Sensors 5 ist, ist dem zu messenden physikalischen, chemischen oder dgl. Einfluß ausgesetzt.

Figur 2a zeigt ein Oberflächenwellen-Substrat 5' mit zwei Oberflächenwellenanordnungen 15' und 25'. Die Oberflächenwellen-Interdigitalwandler 21 und 22 sind jeweilige Eingangswandler und Ausgangswandler des Sensorelementes 15'. Mit 23 und 24 sind die entsprechenden Interdigitalwandler des Referenzelementes 25' bezeichnet. Mit 16 und 17 sind die Antennen angegeben, die zum Empfang des Funksignals des Weges 6 und zur Abstrahlung des Signals des Funkweges 7 dienen. Gegebenenfalls kann es ausreichend sein, als Antenne 16 und/oder 17 lediglich eine Leiterbahn oder eine Dipolantenne auf dem Oberflächenwellen-Substrat 20 vorzusehen. Es kann aber auch eine übliche Antenne vorgesehen sein. Die Figur 2 zeigt eine integrierte Ausführung des Sensors als eine Ausführungsform des Sensors 5 der Figur 1.

Figur 2b zeigt eine der Figur 2a entsprechende Ausgestaltung mit Reflektoren 22a und 24a anstelle der Wandler 22 und 24. Hier sind die Wandler 21 und 23 Eingang und Ausgang der Oberflächenwellenanordnung dieser Figur.

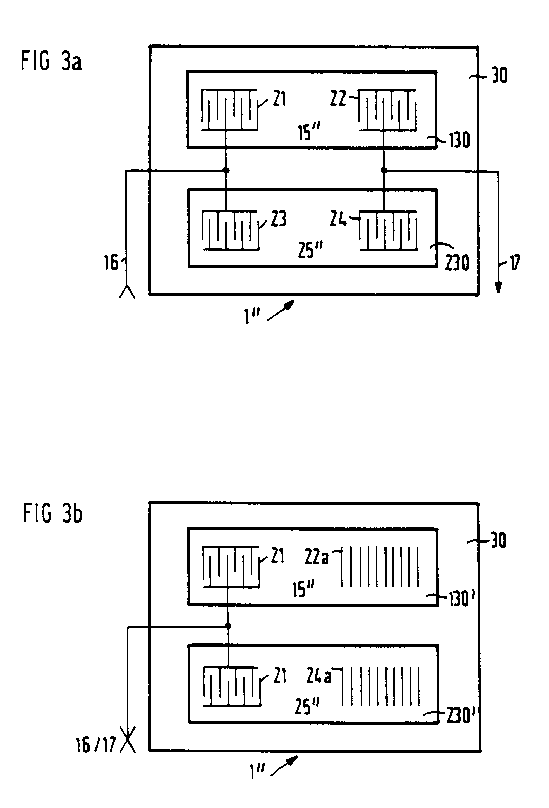

Figur 3a zeigt eine Anordnung mit Sensorelement und Referenzelement am Meßort. Mit 30 ist ein Trägermaterial für das piezoelektrische Oberflächenwellen-Substrat 130 des Sensorelementes 15" und für das piezoelektrische Oberflächenwellen-Substrat 230 des Referenzelementes 25" bezeichnet. Die Wandlerstrukturen 21-24 können gleich denen der Ausführungsform der Figur 2 sein.

Zum Beispiel ist das Substrat 130 ein solches aus Lithiumniobat, Lithiumtantalat und dgl. Dieses Material ist stark temperaturabhängig hinsichtlich seiner für Oberflächenwellen maßgeblichen Eigenschaften. Insbesondere kann, allerdings ganz entgegengesetzt der üblichen Praxis für Oberflächenwellenanordnungen, ein solcher Schnitt des Kristallmaterials gewählt werden, der große Temperaturabhängigkeit zeigt. Für einen Temperatursensor ist hier für das Substrat 230 des Referenzelementes zweckmäßiger Weise Quarz zu verwenden, das wenig temperaturabhängig ist.

Mit 16 und 17 sind wieder die Antennen bezeichnet.

Figur 3b zeigt eine der Figur 3a entsprechende Ausführungsform mit Reflektoren 22a und 24a wie in Figur 2b und anstelle der Wandler 22 und 24.

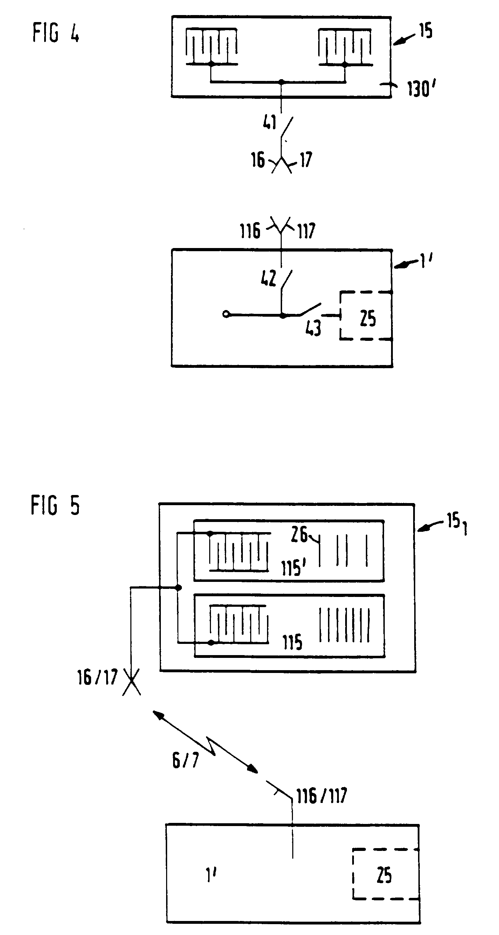

Die Figur 4 zeigt eine Ausführungsform, bei der - wie oben als eine Möglichkeit der Realisierung der Erfindung beschrieben - das Referenzelement 25 als zusätzlicher Anteil im Abfragegerät 1' enthalten ist. Das passive Oberflächenwellen-Sensorelement mit seinem Substrat 130' ist mit 15 bezeichnet. Mit 16 und 17 bzw. 116 und 117 sind die betreffenden Antennen des Sensorelementes und des Abfragegerätes bezeichnet. Es sind Schalter 41-43 vorgesehen, die für die jeweilige Betriebsphase zu schließen sind, um den Phasen- und/oder Laufzeitvergleich zwischen (jeweiligen) Sensorelement 15 und Referenzelement 25 ausführen zu können.

Die Figur 5 zeigt eine prinzipiell der Ausführungsform der Figur 4 entsprechende erfindungsgemäße Anordnung, die aber noch zusätzlich Mittel zur Realisierung einer Identifizierungsfunktion enthält. Das Abfragegerät mit darin enthaltenem Referenzelement 25 ist wieder mit 1' bezeichnet. Mit 6 ist die Funkverbindung vom Abfragegerät 1' zum Sensor $15_1$ bezeichnet. Der Sensor $15_1$ umfaßt zwei Sensorelemente 115 und 115'. Das Sensorelement 115 ist auf eine erste Frequenz $f_1$ konzipiert. Das Sensorelement 115' enthält eine mit 26 bezeichnete Codierungsstruktur. Die Eingänge und Ausgänge der beiden Sensorelemente 115 und 115' sind bezüglich der Antenne 16 parallel geschaltet. Die Funkverbindung zum Auswertegerät 1' ist wieder mit 7 bezeichnet.

Entsprechend der Codierung liefert die akustische Wegstrecke des Sensorelementes 115' ein charakteristisches Antwortsignal. Die beiden Sensorelemente 115 und 115' können auch verschiedene Grundlaufzeit oder auch sowohl unterschiedliche Frequenz als auch verschiedene Grundlaufzeit besitzen.

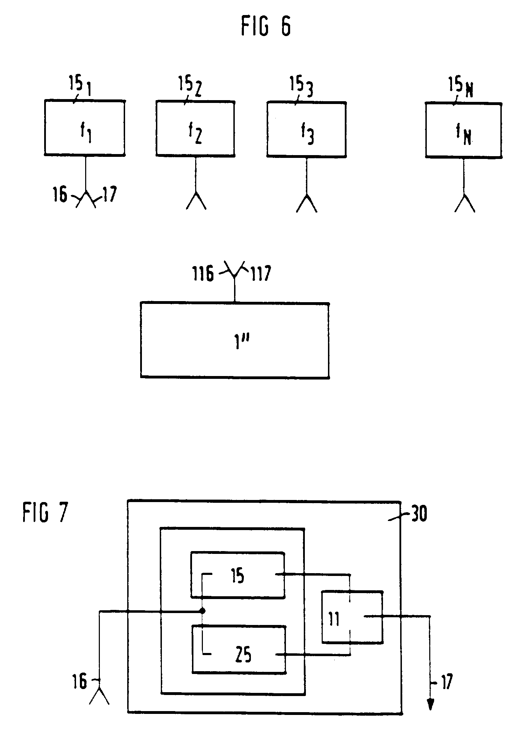

Als Prinzipbild zeigt die Figur 6 eine Darstellung mit mehreren Sensorelementen $15_1$, $15_2$, $15_3$ bis $15_N$, die alle (gleichzeitig) im Funkfeld des Abfragegeräts liegen. Für jedes dieser Sensorelemente ist eine eigene Frequenz $f_1$, $f_2$, $f_3$ bis $f_N$ vorgegeben. Das Abfragegerät 1, 2' enthält die zum Abfragen der Sensorelemente $15_1$ ... $15_N$ und zur Verarbeitung der von diesen Sensorelementen empfangenen Meßwertsignale notwendigen Schaltungsanteile. Mit jedem einzelnen Sensorelement $15_1$ bis $15_N$ kann separat je eine physikalische Größe gemessen werden.

Figur 7 zeigt eine weitere Anordnung zur Erfindung. Es ist eine Anordnung mit passiver Signalverarbeitung, zum Beispiel Auswertung mit Phasendiskrimination. Auf dem Chip bzw. Träger 30 befinden sich das Sensorelement 15 und das Referenzelement 25. Der Phasendiskriminator ist mit 11 bezeichnet und ist (ebenfalls) auf dem Träger 30 angeordnet. Die Antenne übermittelt das Diskriminatorsignal.

Nachfolgend werden weitere Einzelheiten zu dem schon weiter oben beschriebenen weiteren Lösungsprinzip mit integrierter, impliziter Referenzfunktion der verwendeten Oberflächenwellenstrukturen bzw. -elemente, und zwar am Beispiel eines Temperatursensors, beschrieben. Dieses Lösungsprinzip ist aber keineswegs auf die Temperaturmessung beschränkt, sondern kann auch angewendet werden zur Messung von Kräften, Druckwerten, Licht, Korpuskularstrahlung, Feuchte und Gasballast. Zur Messung solcher physikalischer Größen kann zusätzlich auch eine physikalisch, chemisch und/oder biologisch aktiv wirksame Schicht vorgesehen sein, die ihrerseits auch zusätzlich signalverstärkend effektiv sein kann. Eine solche Schicht kann auf der Substratoberfläche auf vorgesehene Oberflächenwellenanordnungen aufgebracht sein.

Wie schon oben beschrieben, umfaßt das System dieses weiteren Lösungsprinzips ebenfalls Oberflächenwellen-Sensorelemente- und zugehörige Abfragegeräts mit Sendeteil, Empfangsteil und Auswerteteil. Es sind gechirpte Oberflächenwellenstrukturen im Sensor enthalten. Für ein Abfragesignal hat eine solche Struktur bekanntlich nicht nur eine bestimmte Laufzeit t , sondern innerhalb der Struktur auch einen von der Frequenz des Abfragesignals abhängigen Ort der Antwort. Sowohl Laufzeit (wie bei den bisher beschriebenen Ausführungsbeispielen) als auch dieserort sind abhängig von äußeren Einflüssen, d. h. abhängig von mit dem Sensor aus diesem Grunde detektierbaren Meßgrößen, die die Laufzeit beeinflussen. Eine solche Meßgröße ist z. B. die Temperatur des Sensors.

Von dem Abfragegerät wird ein Abfragesignal ausgesendet und von den Oberflächenwellenstruktur empfangen, das vorzugsweise gechirpt ist. Es handelt sich dabei um ein Hochfrequenzsignal, das in einer vorgegebenen Bandbreite während des Abfrage-Zeitintervalls sich von dem einen Frequenzgrenzwert zum anderen Frequenzgrenzwert verändernde Frequenz hat. Der Begriff "chirp" ist im übrigen bekannt aus: Meinke, Gundlach "Taschenbuch der Hochfrequenztechnik", Kapitel Q 61 und L 68. Die vorgesehenen Oberflächenwellen-Elemente und der Frequenzbandbereich des Abfragesignals sind aufeinander angepaßt.

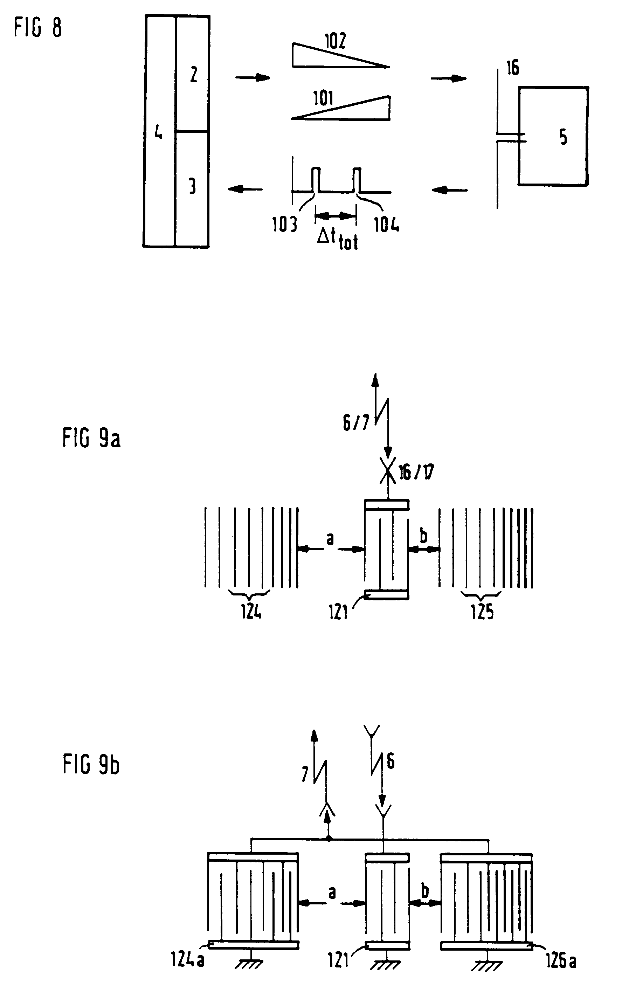

Figur 8 zeigt ein Prinzipbild einer Weiterbildung. Mit 1 ist wieder das Abfragegerät mit Sendeteil 2, Empfangsteil 3 und Auswerteteil 4 bezeichnet. Zweckmäßigerweise gleichzeitig oder aber auch nacheinander werden hier zwei Abfragesignale ausgesendet, von denen das eine ein up-chirp-Signal (steigende Frequenzmodulation) und das andere ein down-chirp-Signal (fallende Frequenzmodulation) ist. Der Sendeteil sendet also zum Beispiel gleichzeitig zwei Sendeimpulse 101 und 102 aus, von denen der eine das up-chirp-Signal und der andere das down-chirp-Signal ist. Der Sensor 5 empfängt diese beiden gechirpten Signale. Vom Sensor 5 werden zwei Antwortsignale 103 und 104 ausgesandt, die in den Empfangsteil 3 des Abfragegeräts 1 zurückgelangen.

Figur 9a zeigt als ein Beispiel eine Ausführungsform eines zu diesem Prinzip zugehörigen Sensors 5 mit einem Wandler 121 mit der Antenne 16 und mit zwei Oberflächenwellen-Reflektoranordnungen, die dem Wandler zu einer kompletten Oberflächenwellen-Anordnung zugeordnet sind und sich auf dem Substrat dieser Anordnung bzw. des Sensors 5 befinden. Wie aus der Figur 9a ersichtlich, handelt es sich um gechirpte Reflektoren mit sich über den Reflektor hinweg entsprechend ändernder Periodizität (und ändernder Streifenbreite). Ihre Anordnung bezüglich des Wandlers 121 ist so gewählt, daß bei der Reflektorstruktur 124 deren hochfrequentes Ende (down-chirp-Struktur) und bei der Reflektorstruktur 125 deren niederfrequentes Ende (up-chirp-Struktur) dem Wandler 121 zugewandt ist. Der Reflektor 124 wirkt als Kompressor für das down-chirp-Signal und der Reflektor 125 als Kompressor für das up-chirp-Signal.

Das (gleichzeitige) Aussenden der beiden gechirpten (schmalbandigen) Abfragesignale, deren jeweilige Dispersion ihrer zugehörigen Reflektorstruktur des Sensors angepaßt ist, führt in einer Anordnung wie in Figur 9a gezeigt dazu, daß über den Wandler 121 und die Antenne 16 zwei zeitlich komprimierte (breitbandige) Impulse als Antwortsignal der Oberflächenwellen-Anordnung zurückgesandt werden. Es kann auch mit Abfrageimpulsen oder nicht dispersivem Abfragesignal(-en) gearbeitet und zum Laufzeitunterschied als Sensorergebnis führender Signal-Weiterverarbeitung gearbeitet werden.

Der zeitliche Abstand der Antwortimpulse voneinander ist bei gegebener gechirpter Anordnung der Reflektorstreifen der Reflektorstrukturen 124, 125 abhängig von der Fortpflanzungsgeschwindigkeit der akustischen Welle in der Oberfläche des Substratmaterials des Sensors. Ändert sich die Fortpflanzungsgeschwindigkeit, zum Beispiel bei sich ändernder Temperatur des Substratmaterials oder durch zu messende Gasbelastung und dgl., so ändert sich der Zeitabstand der beiden genannten Impulse. Das Impulssignal, das aus dem chirp-down-Signal entstanden ist, gelangt (ab

7

einer gewissen Mindestchirprate) nach kürzerer Zeit in das Abfragegerät 1 als ein ungechirptes Signal. Entsprechend kommt ein Impulssignal, das aus dem chirp-up-Signal entstanden ist, nach noch längerer Zeit als das ungechirpte Signal im Abfragegerät an.

Die Figur 9b zeigt eine der Figur 9a entsprechende Ausführungsform mit gechirpten Wandlern 124a und 125a anstelle der gechirpten Reflektoren 124 und 125. Diese Wandler 124a und 125a sind als Ausgang geschaltet. Es können aber auch alle drei Wandler 121, 124a und 124b parallelgeschaltet als Eingang und Ausgang genutzt sein.

Nachfolgend werden die dazugehörigen mathematischen Zusammenhänge dargelegt.

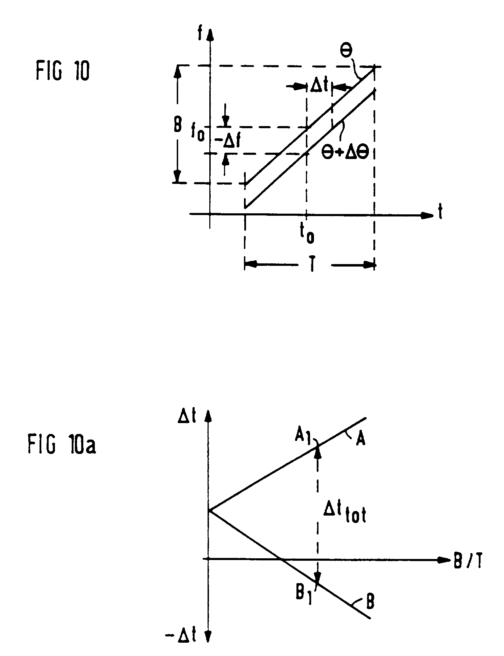

Anhand der Figur 10 wird der Zusammenhang von Laufzeitunterschied $\Delta t$, Chirprate $B/T$ (mit T gleich der zeitlichen Länge des Chirps) und Temperaturänderung $\Delta\theta$ für ein Teilsystem mit positiver Chirprate $B/T$ abgeleitet. Die Figur 10 zeigt die Augenblicksfrequenzen f der Impulsantwort des Sensors (nur das up-System) bei einer Temperatur $\theta$ und einer höheren Temperatur $\theta + \Delta\theta$. Das Abfragegerät 1 sendet das Abfragesignal mit der temperaturunabhängigen Mittenfrequenz $f_0$ aus, die bei der höheren Temperatur $\theta + \Delta\theta$ um die Zeitdifferenz $\Delta t$ längere Laufzeit hat.

In Figur 10 dargestellt in der Frequenz/Zeitebene, ist der chirpunabhängige Temperatureffekt vernachlässigt, nämlich daß auch die mittlere Laufzeit $t_0$ durch die höhere Temperatur verlängert wird. Berücksichtigt man auch diesen Effekt, so berechnet sich die Laufzeit des Signals mit positiver Frequenzmodulation im Sensor zu

$$t_{up}^{\theta} = t_{up}^{0} + \frac{T}{B} \cdot f + t_{up}^{0} \, \theta_k \cdot \Delta\theta$$

$$f = f_0 \, \theta_k \cdot \Delta\theta \qquad\qquad\qquad (1)$$

dabei sind

$f_0$      Mittenfrequenz

$\theta_k$      Temperaturkoeffizient des Substratmaterials

$t_{up}^{\circ}$      mittlere Laufzeit für $\Delta\theta = 0$

$\theta^{\circ}$      Temperaturdifferenz des Sensors zu einer gewissen vorgegebenen Temperatur $\theta$

Durch Einsetzen und Ausklammern ergibt sich

$$t_{up}^{\theta} = t_{up}^{0} + (\frac{T}{B} \cdot f_0 + t_{up}^{0}) \, \theta_k \cdot \Delta\theta \qquad\qquad (2)$$

An dieser Formel ist zu erkennen, daß das Chirpsystem bei $t_{up}^{0} = T$ eine um den Faktor $f_0/B$, d. h. um die reziproke relative Bandbreite größere Zeitverschiebung liefert, als ein ungechirptes System. Für das down-System gilt analog zum up-System.

$$t_{down}^{\theta} = t_{down}^{0} + (-\frac{T}{B} \cdot f_0 + t_{down}^{0}) \, \theta_k \cdot \Delta\theta \qquad\qquad (3)$$

und für das Gesamtsystem ergibt sich als Zeitverschiebung $t_{tot}$ der Impulssignal, die durch Kompression aus den up- und down-Chirp-Signalen entstanden sind:

$$\Delta t_{tot}^{\theta} = t_{up}^{0} - t_{down}^{0} = t_{up}^{0} - t_{down}^{0} + (2\,T\,f_0/B + \left( t_{up}^{0} - t_{down}^{0} \right)) \, \theta_k \cdot \Delta\theta \qquad (4)$$

Die Zeitverschiebung des Gesamtsystems, aufgrund der konstanten Grundlaufzeit, hebt sich für ein up- und ein down-System gleicher Grundlaufzeit ($t^{\circ}up = t^{\circ}down$) auf, während sich der Effekt des Chirps verdoppelt. Die Zeitdifferenz $\Delta t_{tot}$ ist somit ein absolutes Maß für die aktuelle Temperatur $\theta + \Delta\theta$ des Sensors bzw. dessen Wellenausbreitungsgeschwindigkeit, da die Bezugstemperatur $\theta$ bekannt und fest ist. Die Bezugstemperatur ist die Temperatur in der Mitte des Meßbereichs des Sensors, und wird bei dessen Entwurf festgelegt. Durch einen angepaßt bemessenen (kleinen) Zeitunterschied $t_{up}^{0} - t_{down}^{0}$, der sich zum Beispiel in jeweils unterschiedlichem Abstand zwischen Reflektor und Wandler kann die Meßgröße $\Delta t_{tot}$ für alle Temperaturen in einem vorgegebenen Meßbereich positiv eingestellt werden. Konstruktiv wird dieser (kleine) Zeitunterschied durch einen entsprechend bemessenen Abstandsunterschied der Abstände (a-b) zwischen einerseits dem Wandler 121 und andererseits den Reflektoren 124 bzw. 125 in Figur 9a oder den Wandlern 124a und 125a in Figur 9b. Dadurch erübrigt sich eine Auswertung des Vorzeichens von $\Delta t_{tot}$ im Abfragegerät.

Fig. 10a zeigt in einem Diagramm die Sensitivität des Sensors, d. h. wie sich für einen Wert der zu detektierenden, messenden Meßgröße sich ergebende Größe der Laufzeitänderung $\Delta t$ in Abhängigkeit von der Chirprate T/B der dispersiven, gechirpten Struktur, die ansteigende Gerade A zeigt das Wachsen der Sensitivität einer up-chirp-Struktur mit wachsender Chirprate T/B. Für eine down-chirp-Struktur ergibt sich (zunächst) entsprechend der Geraden B eine Verringerung der Sensitivität, die nach einem Nulldurchgang negative Werte (- $\Delta t$) wachsende Werte für zunehmende Chirprate annimmt. Ersichtlich sind die Verläufe für eine up-chirp-Struktur und einer down-chirp-Struktur gegenläufig. Für zwei solche Strukturen in einem Sensor ergibt sich als Gesamtsensitivität der jeweilige gesamte Laufzeitunterschied zwischen den zwei Geraden A und B der beiden Antwortimpulse, d. h. z. B. der Abstand zwischen den beiden Punkten AI und BI.

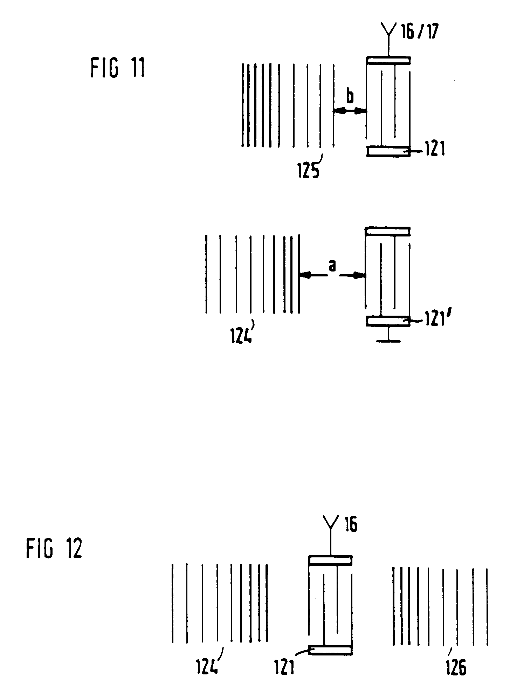

Figur 11 zeigt eine Variante der Ausführungsform der Figur 9a einer Oberflächenwelle anordnung für gechirpte Abfragesignale. Es sind dort die bezogen auf die Antenne hintereinander geschalteten Wandler 121 und 122 auf zwei Spuren verteilt vorgesehen. Sinngemäß können die Wandler auch parallel geschaltet sein. Die entsprechend in zwei Spuren angeordneten Reflektorstrukturen 124 und 125 haben den Aufbau und die Eigenschaften der zu Figur 9a genannten Reflektorstrukturen. Statt der Reflektorstrukturen können wie in Figur 9b auch Wandlerstrukturen vorgesehen sein.

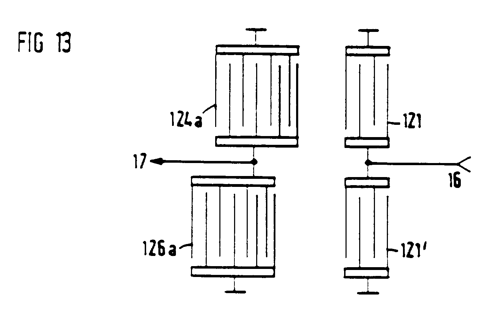

Figur 12 zeigt eine Ausführungsform eines erfindungsgemäß weitergebildeten, mit Oberflächenwellen arbeitenden Sensors. Die Anordnung der Figur 12 unterscheidet sich von der der Figur 9a darin, daß die Reflektorstruktur 126 bezogen auf die Position des Wandlers 121 so angeordnet ist, daß bei der Struktur 126 das hochfrequente Ende des gechirpten Reflektors dem Wandler 121 zugewandt ist, das heißt die beiden Reflektorstrukturen 124 und 126 spiegelsymmetrisch zum Wandler 121 ausgeführt (down-chirp-Strukturen) sind. Die Lehre zur Figur 12 (und Figur 13) kann auch mit up-chirp-Strukturen anstelle der down-chirp-Strukturen ausgeführt werden. Bei dieser Anordnung der Reflektorstrukturen gemäß Figur 12 liegt jedoch wegen der spiegelsymmetrischen Anordnung der Reflektoren ein temperaturabhängiger Zeitunterschied der Antwortimpulse nicht vor, das heißt die Anordnung nach Figur 12 ist als Sensor unabhängig davon, wie sich die Temperatur des Substrats (und der darauf befindlichen OberflächenwellenStrukturen) und/oder sich eine andere Einwirkung, die die Laufzeit der akustischen Welle beeinflußt, ändert. In der Ausführungsform der Figur 12 ist die dargestellte Oberflächenwellen-Anordnung, und zwar durch den Aufbau bedingt, temperaturkompensiert. Dieser Umstand der Variante der Erfindung gemäß Figur 12 ist mit großem Vorteil zur temperaturunabhängigen Messung sonstiger physikalischer, chemischer und/oder biologischer Größen nutzbar. Um eine andere Größe als die Temperatur, z. B. einen Gasballast zu messen, wird die eine der beiden Reflektorstrukturen 124, 126 mit einer auf das zu messende Gas ansprechenden Schicht versehen. Die beschichtete Reflektorstruktur (zum Beispiel 124) spricht auf die Meßgröße an, während die andere unbeschichtet gebliebene Reflektorstruktur (126) von dem Gas unbeeinflußt bleibt. Es ist hier nur ein gechirptes (Sende-) Signal erforderlich. Entsprechend erhält man auch nur ein Antwortimpuls-Signal sofern und solange sich die beiden Reflektoren identisch verhalten. Wird jedoch einer der Reflektoren durch die Meßgröße beeinflußt, ergeben sich zwei Antwortimpulse, deren Zeitabstand der Meßgröße entspricht. Statt der Reflektorstrukturen 124 und 126 können auch Wandlerstrukturen verwendet werden.

Auch ein Sensor nach Figur 9b und 11 wird zu einem temperaturunabhängigen Sensor nach Figur 12, wenn eine der Strukturen 124, 125 oder 124a, 125a so "umgedreht" ist, daß diese Strukturen beide mit ihrem hochfrequenten Ende (down chirp) oder beide mit ihrem niederfrequenten Ende (up-chirp) dem Wandler 121 bzw. den beiden Wandlern 121 und 122 zugewandt sind.

Als Sensorelement ist diejenige Struktur 124 oder 125 wirksam, die auf die vorgegebene Meßgröße empfindlich gemacht bzw. präpariert ist. Die unpräparierte Struktur 125 oder 124 ist das Referenzelement für diese Meßgröße.

Mit Wandlern 124a und 126a erhält man einen temperaturunabhängigen (und von anderen, die Wellengeschwindigkeit beeinflussenden Größen unabhängigen) Sensor gemäß Figur 13, bei dem ebenso wie bei Fig. 12 jeweils die hochfrequenten oder die niederfrequenten Enden der gechirpten (down-chirp oder up-chirp) Wandler 124a/126a den Eingangs-/Ausgangswandlern 121, 121' zugewandt sind, die hier als Beispiel parallelgeschaltet sind, jedoch auch in Reihe geschaltet sein können. Die Wandler 124a/126a können als Ausgangs-/ Eingangswandler verwendet werden. Auch in Fig. 13 ist wieder ein Abstandsunterschied a verschieden b angegeben.

Für eine Anordnung nach Fig. 12 und 13 kann es z. B. vorteilhaft sein für z. B. die dargestellten down-chirp-Strukturen angepaßtes up-chirp-Abfragesignal anzuwenden. Damit erhält man die schon oben beschriebenen komprimierten Antwortimpulse.

Ein Sensor mit spiegelsymmetrisch angeordneten Chirp-strukturen nach Fig. 12 kann aber auch gemäß einer zweiten Variante des Abfrageverfahrens durch den Sender ausgelesen werden. Es wird vom Sender ein kräftiger kurzer Impuls, etwa mit der Mittenfrequenz des Chirpbereiches, oder ein an die Struktur nicht angepaßtes Chirpsignal ausgesendet, deren Spektren den Frequenzbereich des Sensors möglichst konstant überdecken. Vom Sensor wird dann ein Chirpimpuls zeitverzögert zurückgesendet. Die Form der Einhüllenden dieses empfangenen Chirpimpulses ermöglicht die Auswertung der Meßgröße. Herrscht in der Referenzstruktur und in der präparierten Sensorstruktur die gleiche Ausbreitungsgeschwindigkeit der akustischen Welle, so setzen sich alle symmetrisch reflektierten akustischen Wellen der gleichen Frequenz konstruktiv interferierend im Chirpimpuls zusammen und dieser hat einen zeitlich konstanten Amplitudenverlauf. Sind jedoch die Ausbreitungsgeschwindigkeiten in der Sensorstruktur und in der Referenzstruktur voneinander verschieden, dann wechseln sich konstruktive und destruktive Interferenzen bei Durchlaufen der Augenblicksfrequenz des Chirpimpulses ab und dessen Einhüllende weist eine von der Geschwindigkeitsdifferenz der Welle in der Referenzstruktur und der Welle in der Sensorstruktur, d. h. eine der Meßgröße entsprechende abhängige Modulation auf. Beispielsweise wird eine sehr kleine Meßgröße einen nur schrägen Amplitudenverlauf aufweisen. Dagegen hat eine große Geschwindigkeitsdifferenz mehrere Modulationsperioden über die Länge des Chirpimpulses verteilt zur Folge, nämlich ähnlich stehenden Wellen auf einer Leitung.

In einer angepaßt dimensionierten und an die Antenne angepaßten Anordnung nach Figur 12 braucht im übrigen keine akustische Energie in einem Sumpf aus Dämpfungsmaterial vernichtet zu werden, da die akustischen Wellen verlustlos ihren frequenzspezifischen Laufzeiten entsprechend von den Strukturen 124 und 126 in den Wandler 121 vollständig zurückreflektiert werden. Das ist im übrigen ein Vorteil der in-line-Anordnung mit zentral angeordnetem Wandler 121 nach Figur 12, und zwar gegenüber einer parallelen Zweispuranordnung von Referenzstruktur und Sensorstruktur.

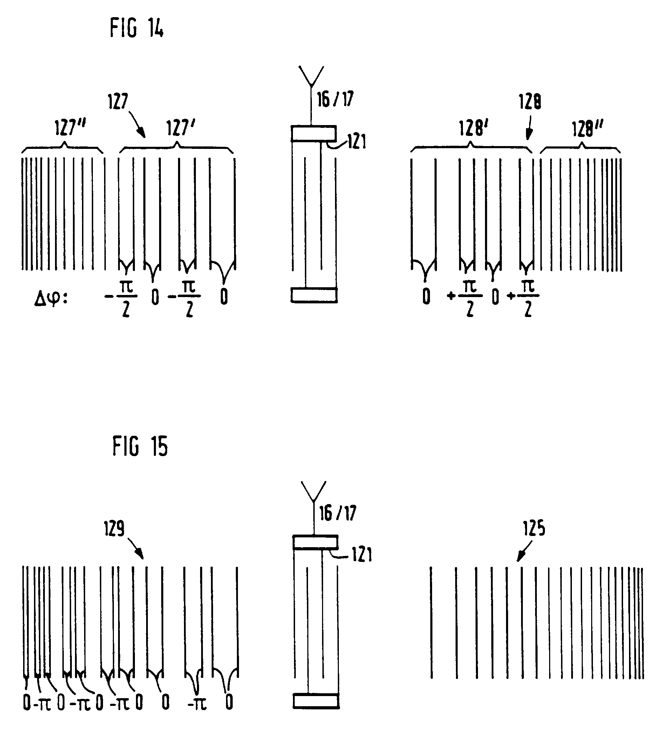

Eine weitere Anwendungs-/Ausgestaltungsmöglichkeit des Sensors nach Fig. 12 zeigt Fig. 14, bei der die gechirpten Strukturen, d. h. die drahtlose Impulsantwort der Sensorstruktur, zusätzlich einen Erkennungscode für den jeweiligen Sensor einschließt. Es ist dies die monolithische Verbindung einer auf Interferenz beruhenden gechirpten Identifizierungsmarke mit einem Sensor nach Fig. 12 (oder auch nach Fig. 13), wie dies oben bereits in anderem Zusammenhang beschrieben ist. Die Reflektorstrukturen 127 und 128 setzen sich aus den den Code in der Impulsantwort erzeugenden Anteile 127' und 128' (reflektierend z. B. von einer unteren Bandgrenze $f_u$ des Chirps bis zu einer dazwischenliegenden Frequenz $f_z$) und einem Referenzanteil 127'' und Sensoranteil 128'' zusammen. Der Sensoranteil 128'' ist z. B. als Gasdetektor mit einer gasempfindlichen Schicht belegt. Die übrigen Anteile 127'', 128'' sind von der Frequenz $f_z$ bis zur oberen Bandgrenze des Chirps reflektierend. Bei Abfrage mit einem Impuls großer Frequenzbandbreite wird in der Impulsantwort ein Codebit der Amplitude 1 mit einer Momentanfrequenz $f_1$ erzeugt, wenn für diese Frequenz die Reflektorstrukturen 127 und 128 spiegelsymmetrisch angeordnet sind, und zwar dies durch konstruktive Interferenz. Ein Codebit der Amplitude 0 entsteht durch destruktive Interferenz bei der Frequenz $f_0$, wenn die beiden an den Strukturen 127' und 128' reflektierten akustischen Wellen mit einem Phasenunterschied von bei $f_2$ im Wandler 121 einfallen. D. h., daß für $f_2$ die Strukturen 127' und 128' gegenüber einer auf den Wandler bezogenen spiegelsymmetrischen Anordnung einander gegensinnig nach innen oder nach außen um je ein Viertel einer akustischen Wellenlänge versetzt angeordnet sind.

Der gleiche Effekt wird im übrigen erzielt, wenn bei der Frequenz $f_2$ die eine der beiden Reflektorstrukturanteilen 127' und 128' keine Phasenmodulation und der andere eine Phasencodierung mit dem Inkrement entsprechend einer halben akustischen Wellenlänge im Sensor hat (Fig. 15).

Auch bei der Ausführungsform der Figur 14 kommt der Vorteil der Temperaturkompensation und der im Prinzip verlustlosen Rückstrahlung der gesamten Impulsenergie zum Tragen.

Wird im Abfragegerät eine Demodulation in der Augenblicksphase der Impulsantwort des Sensors angewendet, so ist ein Sensor gemäß Figur 15 verwendbar, bei dem die gesamte Referenz-Chirpstruktur 129 eine phasencodierte Identifikationskennung mit dem Inkrement einer halben Wellenlänge einschließt, während der Sensoranteil wie die Struktur 125 in Figur 12 ausgeführt ist. Für die Gewinnung der Referenzphase wird ein mit dem Chirp mitlaufender, die Codephase integrierender Phasendetektor (Costas loop) benützt. Gegenüber dieser Referenzphase kann die Codierung als im Codetakt erfolgende schnelle Phasenänderung erkannt werden. Die Sensorgröße bewirkt ähnlich wie bei der Impulsabfrage des Sensors nach Fig. 12 eine zweistufige Modulation der Amplitude der Impulsantwort. Die zwei Stufen entsprechen der um 0 bzw. einer halben Wellenlänge versetzten Referenzphase. Damit kann diese Meßgröße des Sensors durch Abtastung des Chirpimpulses entweder während der Codetakte 1 oder während der Codetakte 0 gewonnen werden.

Eine noch weitere Weiterbildung der Erfindung läßt sich mit einer Oberflächenwellenanordnung mit down-chirp-Strukturen entsprechend den Figuren 12 und 13 ausführen.

Für die dieser Weiterbildung zugrundeliegende Lehre zum technischen Handeln sind jedoch nur down-chirp-Sturkturen verwendbar, nämlich solche, die, wie aus der Figur 10a ersichtlich, eine Sensitivität entsprechend der Geraden B mit einem Nulldurchgang haben.

Für die Anordnung nach Fig. 12 oder 13 kann ein solches Design für die gechirpten Strukturen 124 und 126 angegeben weroen, daß die Chirprate B/T für jede der beiden Strukturen genau der Wert des Nulldurchgangs der Geraden B der Figur 10a ist. Mit anderen Worten heißt dies, daß der in der Klammer der Gleichung 3 stehende Multiplikant des zweiten Gliedes der Gleichung (3) gleich 0 gemacht wird, d. h.

$$B/T = t_{down}/f_0 \qquad\qquad (5)$$

Da für die down-chirp-Struktur die beiden Ausdrücke in der Klammer entgegengesetztes Vorzeichen haben, kann dieser Klammerausdruck tatsächlich für eine vorgebbare Chirprate B/T gleich 0 gemacht werden. Damit fällt aus der Gleichung 3 die Abhängigkeit von der Meßgröße heraus, die dort als Temperatur θ angegeben ist.

Gegenüber der obigen allgemeinen Lehre zu den Figuren 12 und 13, die auf Kompensation von zwei gegenläufigen Temperaturabhängigkeiten beruht, liegt dieser Weiterbildung der Erfindung eine durch Bemessung der Chirprate prinzipiell temperaturunabhängige Oberflächenwellenanordnung vor. Diese Anordnung ist ebenfalls nicht nur temperaturunabhängig, sondern auch invariant gegenüber anderen, die Laufzeit verändernden äußeren Einflüssen. Damit auch diese Oberflächenwellenanordnungen als (temperaturunabhängiger) Sensor verwendbar ist, ist eine zusätzliche Maßnahme vorzusehen, um dennoch eine Meßwert-Sensitivität zu erreichen. Z. B. kann, wie schon zu den Figuren 12 und 13 beschrieben, zur Messung von Gasen eine der beiden Strukturen 124, 126 mit einer Beschichtung versehen sein, die diese Struktur für ein jeweiliges Gas derart empfindlich macht, daß einwirkendes solches Gas die Oberflächenwellenlaufzeit in dieser einen Struktur beeinflußt. Mit einer solchen Ausführung kann (natürlich in Grenzen gesehen) temperaturunabhängig und auch unabhängig von anderen die Oberflächenwellengeschwindigkeit beeinflussenden äußeren Einwirkungen, (ausgenommen das Gas) Detektion und die Messung der Konzentration des Gases durchgeführt werden.

Das Abfragen kann mit einem angepaßten up-chirp-Sendesignal erfolgen, so daß ein komprimierter Impuls als Antwortsignal zu erhalten ist. Wird mit einem Impuls, oder einem nichtangepaßten Chirpsignal, z. B. einem down-chirp-Signal abgefragt, erhält man ein längeres Signal, von dem z. B. die Einhüllende (wie oben) ausgewertet wird.

**Patentansprüche**

1. Über Funk abfragbare passive Vorrichtung

   mit Oberflächenwellen-Strukturen (15; 124; 127, 25; 125; 126; 128) in einem System, das ein Abfragegerät (1) mit einem Sendeteil (2), einem Empfangsteil (3) und einem Auswerteteil (4) aufweist, **dadurch gekennzeichnet**, daß für die Verwendung als Meßsensor eine erste Oberflächenwellen-Struktur (15; 124; 127) als Sensorelement und eine zweite OberflächenwellenStruktur (25; 125; 126; 128) als Referenzelement vorgesehen sind, wobei mit dem Abfragegerät ein Meßwert abgefragt wird, der aus dem Vergleich der aus den Abfragesignalen resultierenden Ausgangssignale des Sensorelementes (15; 125; 127) und des Referenzelementes (25, 125; 126; 128) gebildet wird und
   wobei das Sensorelement (15; 125; 127) und das Referenzelement (25, 125; 126; 128) für die zu messende Größe unterschiedliche Empfindlichkeiten aufweisen.

2. Vorrichtung nach Anspruch 1,

   - mit wenigstens zwei Oberflächenwellen-Strukturen (15; $15_1$ ... $15_N$) als Sensorelement und

   - mit genau einer Oberflächenwellen-Struktur (25) als Referenzelement.

3. Vorrichtung nach Anspruch 1 oder 2

   - bei dem die Oberflächenwellenstrukturen (15, 25; 124, 125; 124, 126) räumlich vereinigt angeordnet und

   - für die Funkübertragung zwischen Auswertegerät (1) und Sensor (5) Antennen (16, 17) vorgesehen sind.

4. Vorrichtung nach Anspruch 1, 2 oder 3,
   mit auf einem Träger (30) angeordneten Substraten (130, 230) für jeweils das Sensorelement (15") und das Referenzelement (25").

5. Vorrichtung nach Anspruch 4,
   mit Substraten (130, 230) aus für das Sensorelement einerseits und für das Referenzelement andererseits voneinander verschiedenen piezoelektrischen Materialien.

6. Vorrichtung nach Anspruch 1, 2, 3 oder 4,
   bei dem auf dem Träger (30) wenigstens ein Sensorelement (15), ein Referenzelement (25) und eine passiv arbeitende Signalvorverarbeitungs-Einrichtung vorgesehen ist.

7. Vorrichtung nach Anspruch 1,
   mit einem Referenzelement (25), das vom Sensorelement (15) entfernt im Abfragegerät (1') angeordnet ist.

8. Vorrichtung nach einem der Ansprüche 1 bis 7,
   **gekennzeichnet durch** ein weiteres OFW-Element zur Sensoridentifizierung.

9. Vorrichtung nach Anspruch 8,
   mit in der Oberflächenwellenstruktur des Sensorelements integrierter Identifizierungsfunktion.

10. Vorrichtung nach Anspruch 8,
    mit in die Oberflächenwellenstruktur des Sensorelementes zusätzlich eingefügter Identifizierungsstruktur.

11. Vorrichtung nach Anspruch 8, 9 oder 10,
    mit unterschiedlichen Frequenzen ($f_1$, $f_2$) für Meßwertsignal und für Identifizierungssignal.

12. Vorrichtung nach Anspruch 8,
    mit fester Zuordnung von Sensorelement und Referenzelement zueinander und mit im Referenzelement integrierter/eingefügter Identifizierungsfunktion.

13. Vorrichtung nach einem der Ansprüche 1 bis 12,
    bei dem eine Mehrzahl Sensorelemente ($15_1$ ... $15_N$) vorgesehen ist, die in Funkverbindung mit dem Abfragegerät (1") sind, wobei für die einzelnen Sensorelemente unterschiedliche Ausgangssignal-Frequenzen ($f_1$ ... $f_N$) vorgesehen sind.

14. Vorrichtung nach einem der Ansprüche 1 bis 13,
    bei dem eine Mehrzahl von Sensorelementen ($15_1$ ... $15_N$) vorgesehen ist, die in Funkverbindung mit dem Abfragegerät (1") sind, wobei zur Unterscheidung unterschiedliche Grundlaufzeiten vorgesehen sind.

15. Vorrichtung nach einem der Ansprüche 1 bis 14,
    bei dem zur Signalauswertung Phasendiskrimination vorgesehen ist.

16. Vorrichtung nach einem der Ansprüche 1 bis 14,
    bei dem zur Signalauswertung Signalmischung vorgesehen ist.

17. Vorrichtung nach einem der Ansprüche 1 bis 14,
    bei dem zur Signalauswertung Laufzeitvergleich vorgesehen ist.

18. Vorrichtung nach einem der Ansprüche 1 bis 14,
    bei dem zur Signalauswertung Frequenzvergleich vorgesehen ist.

19. Vorrichtung nach einem der Ansprüche 1 bis 18,
    bei dem im Abfragegerät (1) Bandspreizung vorgesehen ist.

20. Vorrichtung nach einem der Ansprüche 1 bis 18,
    bei dem im Abfragegerät (1) matched Filter mit Pulskompression vorgesehen sino.

21. Vorrichtung nach einem der Ansprüche 1 bis 20,
    bei denen als Sensor-/Referenz-Oberflächenwellenstrukturen Oberflächenwellen-Resonatoren (124, 125, 126, 127, 128, 129) vorgesehen sind.

22. Vorrichtung nach einem der Ansprüche 1 bis 20,
    bei denen als Sensor-/Referenz-Oberflächenwellenstrukturen Oberflächenwellen-Wandler (124a, 125a, 126a) vorgesehen sind.

23. Vorrichtung nach einem der Ansprüche 1 bis 20,
    bei denen als Sensor-/Referenz-Oberflächenwellenstrukturen-Oberflächenwellen-Verzögerungsleitungen vorgesehen sind.

24. Vorrichtung nach einem der Ansprüche 1 bis 20,
    bei denen als Sensor-/Referenz-Oberflächenwellenstrukturen dispersive/PSK-Oberflächenwellen-Verzögerungsleitungen vorgesehen sind.

25. Vorrichtung nach einem der Ansprüche 1 bis 24,
    bei denen Low Loss-Filter-Oberflächenwellen-Anordnungen vorgesehen sind.

26. Vorrichtung nach einem der Ansprüche 1 bis 25,
    mit gechirpten Oberflächenwellenstrukturen (124, 125; 124, 126; 127, 128; 125, 129) für Sensor- und Referenzfunktion.

27. Vorrichtung nach Anspruch 26,
mit auf Eingangswandler (121, 121') bezogen nicht-spiegelsymmetrischen Oberflächenwellenstrukturen (124, 125).

28. Vorrichtung nach Anspruch 26,
mit auf Eingangswandler (121, 121') bezogen spiegelsymmetrischen Oberflächenwellenstrukturen (124, 126; 127, 128; 125, 129).

29. Vorrichtung nach einem der Ansprüche 26 bis 28,
bei der diese chirp-Strukturen dieselbe Chirprate B/T aufweisen.

30. Vorrichtung nach einem der Ansprüche 26 bis 29,
bei der diese Oberflächenwellenstrukturen (Fig. 9, 11, 13) vom Eingangswandler in voneinander verschiedenen Abständen (a,b) angeordnet sind.

31. Vorrichtung nach einem der Ansprüche 1 bis 30,
**gekennzeichnet durch** eine Präparierung von OFW-Sensorelementen für eine vorgegebene Meßgröße.

32. Vorrichtung nach einem der Ansprüche 28 bis 30,
bei der eine der spiegelsymmetrisch angeordneten Oberflächenwellenstrukturen als Sensorelement für Sensitivität gegenüber der vorgegebenen Meß-/Detektionsgröße zusätzlich präpariert ist.

33. Vorrichtung nach Anspruch 31 oder 32,
bei der die Sensor-Oberflächenwellenstruktur eine gassensitive Beschichtung aufweist.

34. Vorrichtung nach einem der Ansprüche 26 bis 33,
bei der gechirpte Oberflächenwellenstrukturen (127, 128; 129) mit wenigstens anteilweise zusätzlicher Identifizierungs-Kodierung vorgesehen sind.

35. Vorrichtung nach Anspruch 34,
mit Fingerverschiebung in der kodierten Oberflächenwellenstruktur (127, 128, 129).

36. Vorrichtung nach einem der Ansprüche 1 bis 35,
bei der Eingangswandler (121) und die Oberflächenwellenstrukturen (124, 125; 124, 126; 127, 128; 125, 129) als in-line Anordnung aufgebaut sind.

37. Vorrichtung nach einem der Ansprüche 1 bis 36,
bei die Wandler (121, 121') und die Oberflächenwellenstrukturen (124a, 125a; 124a, 126a) auf parallele Spuren verteilt angeordnet sind.

## Claims

1. Passive apparatus which can be interrogated by radio, with surface wave structures (15; 124; 127, 25; 125; 126; 128) in a system which has an interrogation device (1) with a transmitting part (2), a receiving part (3) and an evaluation part (4), characterized in that for use as a measuring sensor there are provided a first surface wave structure (15; 124; 127) as the sensor element and a second surface wave structure (25; 125; 126; 128) as the reference element, the interrogation device being used to interrogate a measured value which is formed from the comparison of the output signals of the sensor element (15; 125; 127), resulting from the interrogation signals, and the reference element (25, 125; 126; 128) and the sensor element (15; 125; 127) and the reference element (25, 125; 126; 128) having different sensitivities to the variable to be measured.

2. Apparatus according to Claim 1,

   - with at least two surface wave structures (15; $15_1...15_N$) as sensor element and
   - with precisely one surface wave structure (25) as reference element.

3.  Apparatus according to Claim 1 or 2

    -   in which the surface wave structures (15, 25; 124, 125; 124, 126) are arranged spatially combined and
    -   antennas (16, 17) are provided for the radio transmission between the evaluation device (1) and the sensor (5).

4.  Apparatus according to Claim 1, 2 or 3, with substrates (130, 230) arranged on a carrier (30) for the sensor element (15'') and the reference element (25'') respectively.

5.  Apparatus according to Claim 4, with substrates (130, 230) of piezoelectric materials which are different from one another for the sensor element on the one hand and for the reference element on the other hand.

6.  Apparatus according to Claim 1, 2, 3 or 4, in which there is provided on the carrier (30) at least one sensor element (15), a reference element (25) and a passively operating signal-preprocessing device.

7.  Apparatus according to Claim 1, with a reference element (25), which is arranged in the interrogation device (1') remote from the sensor element (15).

8.  Apparatus according to one of Claims 1 to 7, characterized by a further surface wave element for sensor identification.

9.  Apparatus according to Claim 8, with an identification function integrated in the surface wave structure of the sensor element.

10. Apparatus according to Claim 8, with an identification structure additionally inserted into the surface wave structure of the sensor element.

11. Apparatus according to Claim 8, 9 or 10, with different frequencies ($f_1$, $f_2$) for the measured-value signal and for the identification signal.

12. Apparatus according to Claim 8, with a fixed mutual assignment of the sensor element and reference element and with an identification function integrated/ inserted in the reference element.

13. Apparatus according to one of Claims 1 to 12, in which there are provided a plurality of sensor elements ($15_1$ ... $15_N$), which are in radio communication with the interrogation device (1''), different output signal frequencies ($f_1$...$f_N$) being provided for the individual sensor elements.

14. Apparatus according to one of Claims 1 to 13, in which there are provided a plurality of sensor elements ($15_1$...$15_N$), which are in radio communication with the interrogation device (1''), different basic propagation times being provided for differentiation.

15. Apparatus according to one of Claims 1 to 14, in which phase discrimination is provided for the signal evaluation.

16. Apparatus according to one of Claims 1 to 14, in which signal mixing is provided for the signal evaluation.

17. Apparatus according to one of Claims 1 to 14, in which propagation time comparison is provided for the signal evaluation.

18. Apparatus according to one of Claims 1 to 14, in which frequency comparison is provided for the signal evaluation.

19. Apparatus according to one of Claims 1 to 18, in which band spreading is provided in the interrogation device (1).

20. Apparatus according to one of Claims 1 to 18, in which matched filters with pulse compression are provided in the interrogation device (1).

21. Apparatus according to one of Claims 1 to 20, in which surface wave resonators (124, 125, 126, 127, 128, 129) are provided as the sensor/reference surface wave structures.

22. Apparatus according to one of Claims 1 to 20, in which surface wave converters (124a, 125a, 126a) are provided

EP 0 619 906 B1

as the sensor/reference surface wave structures.

23. Apparatus according to one of Claims 1 to 20, in which surface wave delay lines are provided as the sensor/reference surface wave structures.

24. Apparatus according to one of Claims 1 to 20, in which dispersive/PSK surface wave delay lines are provided as the sensor/reference surface wave structures.

25. Apparatus according to one of Claims 1 to 24, in which low-loss filter surface wave arrangements are provided.

26. Apparatus according to one of Claims 1 to 25, with chirped surface wave structures (124, 125; 124, 126; 127, 128; 125, 129) for the sensor function and reference function.

27. Apparatus according to Claim 26, with non-mirrorsymmetrical surface wave structures (124, 125) with respect to input converters (121, 121').

28. Apparatus according to Claim 26, with mirror-symmetrical surface wave structures (124, 126; 127, 128; 125, 129) with respect to input converters (121, 121').

29. Apparatus according to one of Claims 26 to 28, in which these chirp structures have the same chirp rate B/T.

30. Apparatus according to one of Claims 26 to 29, in which these surface wave structures (Fig. 9, 11, 13) are arranged at distances which are different from one another (a, b) from the input converter.

31. Apparatus according to one of Claims 1 to 30, characterized by a preparation of surface wave sensor elements for a predetermined measured variable.

32. Apparatus according to one of Claims 28 to 30, in which one of the mirror-symmetrically arranged surface wave structures is additionally prepared as a sensor element for sensitivity with respect to the predetermined measured/detection variable.

33. Apparatus according to Claim 31 or 32, in which the sensor surface wave structure has a gas-sensitive coating.

34. Apparatus according to one of Claims 26 to 33, in which chirped surface wave structures (127, 128; 129) are provided with additional identification coding, at least with respect to component parts.

35. Apparatus according to Claim 34, with finger shifting in the coded surface wave structure (127, 128, 129).

36. Apparatus according to one of Claims 1 to 35, in which the input converters (121) and the surface wave structures (124, 125; 124, 126; 127, 128; 125, 129) are constructed as an in-line arrangement.

37. Apparatus according to one of Claims 1 to 36, in which the converters (121, 121') and the surface wave structures (124a, 125a; 124a, 126a) are arranged in such a way that they are distributed over parallel tracks.

**Revendications**

1. Dispositif passif pouvant être interrogé par communication par voie hertzienne et comportant des structures à ondes de surface (15;124;127,25;125;126,128) dans un système qui présente un appareil d'interrogation (1) comportant une partie émission (2), une partie réception (3) et une partie évaluation (4), caractérisé par le fait que pour l'utilisation en tant que capteur de mesure, il est prévu une première structure à ondes de surface (15;124;127) en tant qu'élément de détection et une seconde structure à ondes de surface (25, 125;126;128) en tant qu'élément de référence, l'appareil d'interrogation interrogeant une valeur de mesure qui est formée par comparaison entre les signaux de l'élément de détection (15;125;127) et de l'élément de référence (25;125;126;128), qui résultent des signaux d'interrogation, et l'élément de détection (15;125;127) et l'élément de référence (25;125;126;128) possédant des sensibilités différentes pour la grandeur à mesurer.

2. Dispositif suivant la revendication 1 comportant :

- au moins deux structures à ondes de surface ($15;15_1... 15_N$) en tant qu'élément de détection, et
- précisément une structure à ondes de surface (25) en tant qu'élément de référence.

3. Dispositif suivant la revendication 1 ou 2,

 - dans lequel des structures à ondes de surface (15,25; 124,125; 124,126) sont disposées en étant réunies dans l'espace, et
 - des antennes (16,17) sont prévues pour la transmission hertzienne entre l'appareil d'évaluation (1) et le détecteur (5).

4. Dispositif suivant la revendication 1, 2 ou 3, comportant des substrats (130,230) disposés sur un support (30) pour respectivement l'élément de détection (15") et l'élément de référence (25").

5. Dispositif suivant la revendication 4, comportant des substrats (130, 230) constitués par des matériaux piézoélectriques qui diffèrent entre eux et sont prévus d'une part pour l'élément de détection et d'autre part pour l'élément de référence.

6. Dispositif suivant la revendication 1, 2, 3 ou 4, dans lequel sur le support (30) il est prévu au moins un élément de détection (15), un élément de référence (25) et un dispositif de prétraitement des signaux, qui travaille de façon passive.

7. Dispositif suivant la revendication 1, comportant un élément de référence (25), qui est disposé dans une position éloignée de l'élément de détection (15) dans l'appareil d'interrogation.

8. Dispositif suivant l'une des revendications 1 à 7, caractérisé par un autre élément à ondes de surface pour l'identification de détecteurs.

9. Dispositif suivant la revendication 8, comportant une fonction d'identification intégrée dans la structure à ondes de surface de l'élément de détection.

10. Dispositif suivant la revendication 8, comportant une structure d'identification insérée en supplément dans la structure à ondes de surface de l'élément de détection.

11. Dispositif suivant la revendication 8, 9 ou 10, à fréquences différentes ($f_1$, $f_2$) pour le signal de mesure et le signal d'identificatoin.

12. Dispositif suivant la revendication 8, avec association fixe de l'élément de détection et de l'élément de référence entre eux et avec une fonction d'identification intégrée/insérée dans l'élément de référence.

13. Dispositif suivant l'une des revendications 1 à 12, dans lequel est prévu une multiplicité d'éléments de détection ($15_1... 15_N$), qui sont en liaison par voie hertzienne avec l'appareil d'interrogation (1"), différentes fréquences ($f_1... f_N$) des signaux de sortie étant prévues pour les différents éléments de détection.

14. Dispositif suivant l'une des revendications 1 à 13, dans lequel il est prévu une multiplicité d'éléments de détection ($15_1 ... 15_N$) , en liaison par voie hertzienne avec l'appareil d'interrogation (1"), des temps de propagation de base différents étant prévus pour établir la distinction.

15. Dispositif suivant l'une des revendications 1 à 14, dans lequel une discrimination de phase est prévue pour l'évaluation des signaux.

16. Dispositif suivant l'une des revendications 1 à 14, dans lequel un mélange de signaux est prévu pour l'évaluation des signaux.

17. Dispositif suivant l'une des revendications 1 à 14, dans lequel une comparaison du temps de propagation est prévue pour l'évaluation des signaux.

18. Dispositif suivant l'une des revendications 1 à 14, dans lequel une comparaison de fréquences est prévue pour l'évaluation des signaux.

**19.** Dispositif suivant l'une des revendications 1 à 18, dans lequel un étalement de bande est prévu dans l'appareil d'interrogation (1).

**20.** Dispositif suivant l'une des revendications 1 à 18, dans lequel des filtres adaptés à compression d'impulsions sont prévus dans l'appareil d'interrogation (1).

**21.** Dispositif suivant l'une des revendications 1 à 20, dans lequel des résonateurs à ondes de surface (124, 125, 126,127,128,129) sont prévus en tant que structures à ondes de surface de détection/de référence.

**22.** Dispositif suivant l'une des revendications 1 à 20, dans lequel les transducteurs à ondes de surface (124a, 125a,126a) sont prévus en tant que structures à ondes de surface de détection/de référence.

**23.** Dispositif suivant l'une des revendications 1 à 20, dans lequel des lignes à retard à ondes de surface sont prévues en tant que structures à ondes de surface de détection/de référence.

**24.** Dispositif suivant l'une des revendications 1 à 20, dans lequel des lignes à retard dispersives/à modulation de phase PSK et à ondes de surface sont prévues en tant que structures à ondes de surface de détection/de référence.

**25.** Dispositif suivant l'une des revendications 1 à 24, dans lequel sont prévus des dispositifs à ondes de surface à filtres passe-bas.

**26.** Dispositif suivant l'une des revendications 1 à 25, comportant des structures à ondes de surface (124,125; 124,126;127,128;125,129) à modulation d'impulsions pour la fonction de détection et la fonction de référence.

**27.** Dispositif suivant la revendication 26, comportant des structures à ondes de surface (124,125) non symétriques en ce qui concerne les transducteurs d'entrée (121,121').

**28.** Dispositif suivant la revendication 26, comportant des structures à ondes de surface (124,126;127, 128;125,129) symétriques par rapport aux transducteurs d'entrée (121,121').

**29.** Dispositif suivant l'une des revendications 26 à 28, dans lequel ces structures à modulation d'impulsions possèdent le même taux de modulation B/T.

**30.** Dispositif suivant l'une des revendications 26 à 29, dans lequel ces structures à ondes de surface (figures 9, 11, 13) sont disposées à des distances (a,b) du transducteur d'entrée, qui sont différentes les unes des autres.

**31.** Dispositif suivant l'une des revendications 1 à 30, caractérisé par une préparation d'éléments de détection à ondes de surface pour une grandeur de mesure prédéterminée.

**32.** Dispositif suivant l'une des revendications 28 à 30, dans lequel une des structures à ondes de surface disposée symétriquement est en outre préparée en tant qu'élément de détection pour la sensibilité vis-à-vis de la grandeur de mesure/détection prédéterminée.

**33.** Dispositif suivant la revendication 31 ou 32, dans lequel la structure à ondes de surface du détecteur possède un revêtement senbible au gaz.

**34.** Dispositif suivant l'une des revendications 26 à 33, dans lequel il est prévu des structures à ondes de surface à modulation (127,128;129) avec, au moins en partie supplémentaire, un codage d'identification.

**35.** Dispositif suivant la revendication 34, à décalage des doigts dans la structure codée à ondes de surface (124,128,129).

**36.** Dispositif suivant l'une des revendications 1 à 35, dans lequel le transducteur d'entrée (121) et les transducteurs à ondes de surface (124,125;124,128;127,128; 125,129) sont constitués sous la forme d'un dispositif en ligne.

**37.** Dispositif suivant l'une des revendications 1 à 36, dans lequel les transducteurs (121, 121') et les structures à ondes de surface (124a,125b; 124a,126a) sont disposés en étant répartis sur des pistes parallèles.

FIG 1

FIG 2a

FIG 2b

FIG 3a

FIG 3b

FIG 4

FIG 5

FIG 6

$15_1$  $15_2$  $15_3$  $15_N$

$f_1$   $f_2$   $f_3$   $f_N$

$16$   $17$

$116$   $117$

$1''$

FIG 7

30

15

11

25

16

17

FIG 8

FIG 9a

FIG 9b

FIG 10

FIG 10a

FIG 11

FIG 12

FIG 13

124a

126a

17

121

16

121'

EP 0 619 906 B1

FIG 14

$\Delta\varphi$:   $-\dfrac{\pi}{2}$   0   $-\dfrac{\pi}{2}$   0   ...   0   $+\dfrac{\pi}{2}$   0   $+\dfrac{\pi}{2}$

FIG 15

0 -π 0 -π 0 -π 0   0 -π 0